# EUROPÄISCHE PATENTSCHRIFT

(11) **EP 1 184 205 B1**
(45) Veröffentlichungstag und Bekanntmachung des Hinweises auf die Patenterteilung: **28.11.2007**
(21) Anmeldenummer: 01119459.4
(22) Anmeldetag: 13.08.2001
(51) Int. Cl.: B60C 11/00, B60C 15/02, B60C 15/06

(54) **Fahrzeugreifen**
Pneumatic tire
Bandage pneumatique pour véhicule

(30) Priorität: 28.08.2000 DE 10042241
(43) Veröffentlichungstag der Anmeldung: 06.03.2002
(60) Teilanmeldung: 07116602.9
(73) Patentinhaber: Dunlop GmbH & Co. KG, 63450 Hanau (DE)
(72) Erfinder: Gerresheim, Manfred, Dr., 63179 Obertshausen (DE); Riehl, Klaus, Dr., 63584 Gründau (DE); Miyabe, Saburo, 63457 Grossauheim (DE); Winter, Hans-Joachim, 63571 Gelnhausen (DE)
(74) Vertreter: Manitz, Finsterwald & Partner GbR

(56) Entgegenhaltungen:
- EP-A- 0 864 446
- FR-A- 1 483 979
- GB-A- 1 115 834
- GB-A- 1 583 487
- US-A- 2 868 261
- US-A- 4 385 653
- US-A- 4 580 608
- PATENT ABSTRACTS OF JAPAN vol. 006, no. 029 (M-113), 20. Februar 1982 (1982-02-20) & JP 56 146405 A (YOKOHAMA RUBBER CO LTD:THE), 13. November 1981 (1981-11-13)
- PATENT ABSTRACTS OF JAPAN vol. 2000, no. 05, 14. September 2000 (2000-09-14) & JP 2000 062416 A (YOKOHAMA RUBBER CO LTD:THE), 29. Februar 2000 (2000-02-29)

## Beschreibung

Die Erfindung betrifft einen Fahrzeugreifen nach dem Oberbegriff von Anspruch 1.

Fahrzeugreifen müssen hinsichtlich ihrer Performance ständig verbessert und optimiert werden, wobei häufig einander widersprechende Forderungen zu berücksichtigen sind und Leistungsprofile erfüllt werden müssen, die durch den speziellen Einsatzzweck des Reifens individuell vorgegeben werden.

Ein Fahrzeugreifen mit den Merkmalen des Oberbegriffs von Anspruch 1 ist aus der US-A-3 853 164 bekannt. Ähnliche Fahrzeugreifen sind auch aus der EP-A-0 864 446 und US-A-4 580 608 bekannt.

Aufgabe der Erfindung ist es, Möglichkeiten für die individuelle Gestaltung und Vorgabe von Eigenschaften von Fahrzeugreifen aufzuzeigen, die sowohl einzeln als auch in Kombination eingesetzt werden können.

Diese Aufgabe wird durch die Merkmale von Anspruch 1 gelöst.

Weitere in Kombination einsetzbare Möglichkeiten der Gestaltung eines Reifenaufbaus bestehen darin, daß in zumindest einem Wulstbereich außerhalb des jeweiligen Kernreiters ein Verstärkungsstreifen vorgesehen ist und daß in den Wulstbereichen reifeninnen- und reifenaußenseitig Kernreiter unterschiedlicher Höhe angeordnet werden.

Durch diese Möglichkeiten lassen sich die Eigenschaften eines Fahrzeugreifens in unterschiedlichster Weise beeinflussen, so daß bei gezieltem Einsatz einer oder mehrerer der aufgezeigten Möglichkeiten die jeweilige Reifen-Performance optimiert werden kann.

Weitere vorteilhafte Ausgestaltungen der Erfindung sind in den Unteransprüchen angegeben.

Die Erfindung wird nachfolgend anhand von Ausführungsbeispielen unter Bezugnahme auf die Zeichnung erläutert; in der Zeichnung zeigt:
- Figur 1: eine schematische Darstellung einer ersten Ausführungsvariante eines Laufflächenstreifens,
- Figur 2: eine schematische Darstellung einer zweiten Ausführungsform eines Laufflächenstreifens,
- Figur 3: eine schematische Darstellung einer vorteilhaften Wulstbereichsgestaltung in einem Reifenaufbau, und
- Figur 4: eine schematische Darstellung einer erfindungsgemäßen Kernreitergestaltung in einem Reifenaufbau.

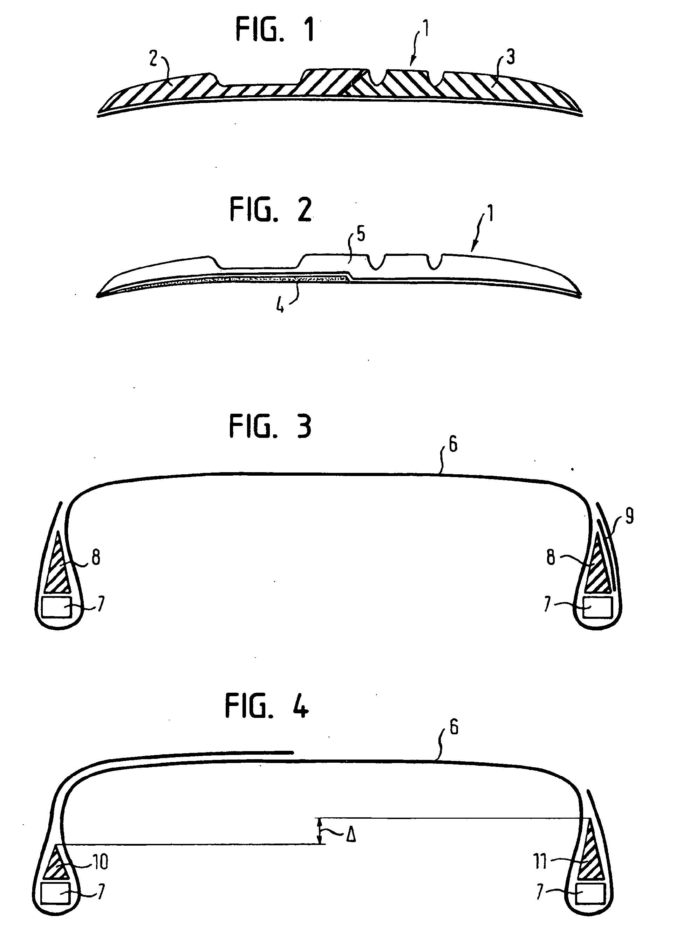

Figur 1 zeigt einen Laufflächenstreifen 1 für einen Reifenaufbau, der aus zwei unterschiedlichen Komponenten 2, 3 besteht, d.h. es sind zwei unterschiedliche Eigenschaften aufweisende Mischungskomponenten verwendet.

Auf diese Weise kann beispielsweise auf der Reifeninnenseite, wo in dem gezeigten Ausführungsbeispiel eine besonders breite Rille vorgesehen ist, eine hinsichtlich der Verschleißfestigkeit und des Rollwiderstandes optimierte Mischung und an der Außenseite eine hinsichtlich des Griffs bzw. der Haftung optimierte Mischung verwendet werden. Die Eigenschaften des mit einer derartigen Lauffläche ausgestatteten Reifens können dabei sowohl durch die Wahl der jeweiligen Komponenten 2, 3 als auch durch die Positionierung der Trennebene zwischen den beiden Komponenten 2, 3 entsprechend den jeweiligen Forderungen beeinflußt werden. Insbesondere ist hier auch eine asymmetrische Gestaltung möglich.

Figur 2 zeigt eine Variante einer Laufflächengestaltung, die sich dadurch auszeichnet, daß unterhalb des durchgehend ausgeführten Laufflächenstreifens 5 in einem Teilbereich der Breite des Laufstreifens, nämlich im dargestellten Fall im Bereich der Innenseite des Reifens, eine Basisschicht 4 vorgesehen ist, die aus einer Mischung von hohem Modul besteht. Diese asymmetrische Ausgestaltung einer Lauffläche ermöglicht eine wesentliche Verbesserung des Rollwiderstandes. Variiert werden kann dabei die formmäßig in den Laufflächenstreifen integrierte Basisschicht sowohl hinsichtlich ihrer materialbedingten Eigenschaften als auch hinsichtlich ihrer radialen Stärke und hinsichtlich ihrer axialen Erstreckung, um das jeweils gewünschte optimale Ergebnis zu erzielen.

In beiden Ausführungsvarianten kann durch Materialwahl und geometrische Gestaltung beider Komponenten auch das Durchbiegungsverhalten des Laufflächenbereichs gezielt beeinflußt werden.

Figur 3 zeigt eine schematische Darstellung einer Karkasslage 6, deren Enden jeweils einen Wulstkern 7 mit darüber angeordnetem Kernreiter umschlingen. Hier ist vorgesehen, daß zumindest im Bereich eines der Kernreiter 8 ein Verstärkungsstreifen 9 vorgesehen wird. Der im Ausführungsbeispiel nach Figur 3 gezeigte, an dem außenseitig gelegenen Kernreiterbereich angeordnete Verstärkungsstreifen 9 ermöglicht es, die Handling-Eigenschaften des Reifens gezielt und merkbar zu verbessern.

Figur 4 zeigt eine weitere Möglichkeit zur Optimierung von Reifeneigenschaften, die darin besteht, auf der Reifeninnenseite und der Reifenaußenseite Kernreiter 10, 11 unterschiedlicher Höhe einzusetzen. Im dargestellten Ausführungsbeispiel ist die radiale Höhe des reifeninnenseitigen Kernreiters 10 um einen Betrag Δ geringer als die radiale Höhe des reifenaußenseitig gelegenen Kernreiters 11. Dieser vergleichsweise hohe Kemreiter 11 ist besonders zur Querkraftaufnahme geeignet und ermöglicht es vor allem, das Handling des Reifens zu verbessern, während generell eine weichere Innenseite des Reifens zu einer Verbesserung des Komforts führt.

Alle vorstehend erläuterten Ausführungsbeispiele gestatten es sowohl für sich allein als auch in Kombination, die Reifen-Performance zu verbessern, und zwar unabhängig von der jeweiligen Profilgestaltung.

Wenn im Zusammenhang mit der Optimierung eines Reifens eine bestmögliche Gewichtsersparnis gefordert wird, dann kann der bei Reifen übliche und bekannte Felgenschutz auf der Innenseite eingespart und nur an der Reifenaußenseite vorgesehen werden, um angestrebte Gewichts- und Kostenreduzierungen zu realisieren.

## Patentansprüche

1. Fahrzeugreifen mit zumindest einer sich zwischen Wulstbereichen erstreckenden Karkasslage, einem Laufflächenbereich und einer zwischen der Karkasslage und dem Laufflächenbereich gelegenen Gürtelanordnung, wobei der Laufflächenbereich aus zumindest zwei unterschiedlichen und gegenseitig in vorgebbarer Weise abgrenzbaren Mischungskomponenten besteht, wobei eine erste Mischungskomponente (2, 4) aus einer hinsichtlich Verschleißfestigkeit und Rollwiderstand optimierten Mischung besteht und ausschließlich reifeninnenseitig vorgesehen ist, und wobei eine zweite Mischungskomponente (3, 5) aus einer hinsichtlich des Griffs optimierten Mischung besteht und zumindest reifenaußenseitig eine profilierte, bei Betrieb des Reifens zum Bodenkontakt vorgesehene Lauffläche (1) bildet, und der Übergang zwischen den Mischungskomponenten in radialer Richtung überlappend ausgeführt ist, **dadurch gekennzeichnet, dass** die erste Mischungskomponente (2) reifeninnseitig eine profilierte, bei Betrieb des Reifens zum Bodenkontakt vorgesehene Lauffläche (1) bildet, oder dass die Lauffläche aus einem über die Breite der Lauffläche durchgehend ausgebildeten Laufflächenstreifen (5) aus einer vorgebbaren Mischungskomponente und einer formenmäßig in den Laufflächenstreifen (5) integrierten, karkassenseitig gelegenen Basisschicht (4) aus einer Mischung mit hohem Modul besteht, wobei in den Wulstbereichen reifeninnseitig und reifenaußenseitig Kernreiter (10, 11) angeordnet sind, von denen der reifeninnenseitig gelegene Kernreiter (10) eine geringere Höhe als der reifenaußenseitig gelegene Kernreiter (11) besitzt.

2. Fahrzeugreifen nach Anspruch 1, **dadurch gekennzeichnet, dass** die beiden Mischungskomponenten über die Laufflächenbreite asymmetrisch verteilt sind.

3. Fahrzeugreifen nach einem der vorhergehenden Ansprüche, **dadurch gekennzeichnet, dass** die Basisschicht sich vom Rand des Laufflächenstreifens (5) bis etwa in den Mittelbereich erstreckt.

4. Fahrzeugreifen nach einem der vorhergehenden Ansprüche, **dadurch gekennzeichnet, dass** in zumindest einem Wulstbereich axial außerhalb des Kernreiters (8) ein Verstärkungsstreifen (9) vorgesehen ist.

5. Fahrzeugreifen nach Anspruch 4, **dadurch gekennzeichnet, dass** der Verstärkungsreifen (9) zwischen dem jeweiligen Kernreiter (8) und dem Umschlagende der Karkasslage (6) vorgesehen ist.

## Claims

1. Vehicle tyre having at least one carcass ply extending between bead regions, a tread region and a belt arrangement disposed between the carcass ply and the tread region, wherein the tread region comprises at least two different mixture components which can be mutually delimited in a predeterminable manner, wherein a first mixture component (2, 4) consists of a mixture optimised with respect to resistance to wear and rolling resistance and is only provided at the inner side of the tyre, and wherein a second mixture component (3, 5) consists of a mixture optimised with respect to grip and forms, at least at the outer side of the tyre, a tread (1) having a profile provided for ground contact in operation of the tyre and the transition between the mixture components is made overlapping in a radial direction,
**characterised in that**
the first mixture component (2) forms, at the inner side of the tyre, a tread (1) having a profile provided for ground contact in operation of the tyre; or **in that** the tread consists of a tread strip (5) which is formed in a throughgoing manner over the width of the tread and comprises a predeterminable mixture component and a base layer (4) which is integrated shapewise into the tread strip, is disposed at the carcass side and comprises a mixture with a high module, with bead apexes (10, 11) being arranged in the bead regions at the inner side of the tyre and at the outer side of the tyre of which the bead apex (10) arranged at the inner side of the tyre has a smaller height than the bead apex (11) arranged at the outer side of the tyre.

2. Vehicle tyre in accordance with claim 1, **characterised in that** the two mixture components are asymmetrically distributed over the tread width.

3. Vehicle tyre in accordance with any one of the preceding claims, **characterised in that** the base layer extends from the edge of the tread strip (5) approximately up to and/or into the central region.

4. Vehicle tyre in accordance with any one of the preceding claims, **characterised in that** a reinforcing strip (9) is provided in at least one bead region axially outside the bead apex (8).

5. Vehicle tyre in accordance with claim 4, **characterised in that** the reinforcing strip (9) is provided between the respective bead apex (8) and the turned over end of the carcass (6).

## Revendications

1. Pneumatique de véhicule, comprenant au moins une couche de carcasse qui s'étend entre des régions de talon, une région de surface de roulement, et un agencement de ceinture disposé entre la couche de carcasse et la région de surface de roulement, dans lequel la région de surface de roulement est constituée d'au moins deux composants de mélange différents et susceptibles de se séparer réciproquement de manière prédéterminée, un premier composant de mélange (2, 4) étant constitué d'un mélange optimisé vis-à-vis de la résistance à l'usure et de la résistance au roulement et étant prévu exclusivement du côté intérieur au pneumatique, et un second composant de mélange (3, 5) étant constitué d'un mélange optimisé vis-à-vis de l'agrippement et forme, au moins du côté extérieur du pneumatique, une surface de roulement profilée (1) prévue pour venir en contact avec le sol pendant le fonctionnement du pneumatique, et la transition entre les composants de mélange est réalisée avec chevauchement en direction radiale, **caractérisé en ce que** le premier composant de mélange (2) forme, du côté intérieur au pneumatique, une surface de roulement profilée prévue pour venir en contact avec le sol pendant le fonctionnement du pneumatique, ou **en ce que** la surface de roulement est constituée d'une bande de roulement (5) réalisée en continu sur la largeur de la surface de roulement, en un composant de mélange prédéterminé et en une couche de base (4), à partir d'un mélange à module élevé, intégré quant à sa forme dans la bande de roulement (5) et disposé du côté carcasse, dans lequel des âmes (10,11) sont agencées du côté intérieur et du côté extérieur au pneumatique dans les régions de talon, parmi lesquelles l'âme (10) disposée du côté intérieur au pneumatique possède une hauteur inférieure à celle de l'âme (11) disposée du côté extérieur au pneumatique.

2. Pneumatique de véhicule selon la revendication 1, **caractérisé en ce que** les deux composants de mélange sont répartis de façon asymétrique sur la largeur de la surface de roulement.

3. Pneumatique de véhicule selon l'une des revendications précédentes, **caractérisé en ce que** la couche de base s'étend depuis la bordure de la bande de roulement (5) environ jusque dans la zone médiane.

4. Pneumatique de véhicule selon l'une des revendications précédentes, **caractérisé en ce qu'**une bande de renforcement (9) est prévue au moins dans une région de talon axialement à l'extérieur de l'âme (8).

5. Pneumatique de véhicule selon la revendication 4, **caractérisé en ce que** la bande de renforcement (9) est prévue entre l'âme respective (8) et l'extrémité rabattue de la couche de carcasse (6).
